# EUROPEAN PATENT APPLICATION

(11) **EP 3 477 437 A1**
(43) Date of publication of application: **01.05.2019**
(21) Application number: 17306482.5
(22) Date of filing: 27.10.2017
(51) Int. Cl.: G06F 3/02

(54) **METHOD OF REMOTE-STIMULATED DEVICE ILLUMINATION THROUGH PHOTOLUMINESCENCE AND CORRESPONDING APPARATUS**

(71) Applicant: THOMSON LICENSING, 92130 Issy les Moulineaux (FR)
(72) Inventor: LUTHI, Yves, 8048 Zürich (CH); KELLER, Tony, 8048 Zürich (CH)
(74) Representative: Huchet, Anne

(57) **Abstract**

A device or surface is illuminated by a radiation source that is invisible to the human eye. Phosphorescent or fluorescent materials responsive to the invisible radiation are applied on the device. These materials will store the received radiation and release the received energy in the visible spectrum through photoluminescence. This provides for illumination of the device in low visibility conditions. The device to be illuminated is searched within an area. The search includes a scan wherein the area is partitioned in spots to which the invisible radiation source is directed sequentially. A photodetector, detecting light in the visible spectrum, detects light reemitted by the device in one or more spots where the invisible radiation hits the searched device. The searched device can thus be in the area and the UV light source can be controlled to efficiently direct UV light in the direction where the device is found.

## Description

### FIELD

The present disclosure generally relates to the field of remote device illumination and in particular to the illumination at distance of a device by means of remote stimulated radiation based on photoluminescence.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Wireless devices such as wireless keyboards or wireless mice are usually not equipped with permanent illumination features. This is because such features reduce battery life-time and make the device more complex and costlier. US 2004/0160762 to Fawausa describes an arrangement wherein, as an integrated unit within a commercial display unit, an ultraviolet (UV) light source would be positioned for maximum illumination. Under the most efficient circumstances a single UV-LED (Light Emitting Diode) light source could be positioned above the illuminated object at a predetermined distance for effective illumination but in a manner that insures that it will not interfere with the users vision or periphery. The UV light source could be made to provide a broad radial pattern over the entire area or modified with a directional cone or shield focusing the light to the desired area for illumination. At least one UV-LED is positioned and oriented to radiate at an angle downward, sideways or towards indicia made from or treated with phosphorescent or fluorescent materials. US 7,531,764 to Lev et al. describes a keyboard illumination system having a keyboard being illuminated with an ultraviolet light source. Legends on the keycaps are invisible in white light but become visible in response to being exposed to UV light. The keyboard may be a separate physical unit coupled to an electronic device via a wireless connection. The light source may be disposed in a display member such that the light source is positioned to facilitate directing UV light in a direction toward the keyboard. The light source may be configured to be directionally adjustable to facilitate manipulation thereof by a user for directing energy toward the keyboard.

It is therefore desirable to provide for an energy efficient illuminated device that proposes a good level of illumination even when moved, without user intervention.

### SUMMARY

Accordingly, the present disclosure provides for a method of remote-stimulated device illumination through photoluminescence. The method comprises transmitting, by an invisible electromagnetic radiation source, pulses of invisible electromagnetic radiation and directing, through electronical arrangement for directing the invisible electromagnetic radiation, each pulse of invisible electromagnetic radiation to a different spot in a search area for searching the device. The device comprising materials that convert the invisible electromagnetic radiation into visible light, the method further comprises determining the location of the device, the location of the device being identified by the spot targeted during the pulse and by a high output level of a photodetector during at least one pulse, the high output level being higher than an output level of the photodetector during absence of a pulse, the photodetector detecting visible light. The method further comprises directing the invisible electromagnetic radiation to the determined location for remote-stimulated illumination of the device through photoluminescence.

According to a further aspect of the method, the high output level is further among a highest output level detected from all targeted spots.

According to a further aspect of the method, the transmitting of the pulses is synchronized with a refresh rate of a display device.

According to a further aspect of the method, the electronical arrangement is comprised in the display device.

According to a further aspect of the method, the photodetector is comprised in the electronical arrangement.

According to a further aspect of the method, a pulse width of the pulses is adjusted as a function of a desired illumination of the device.

According to a further aspect of the method, when the device is moved and a presence of the device in the determined location is not detected by a high output level of the photodetector, the presence of the device is searched in spots that are neighboring to spots in the determined location.

According to a further aspect of the method, the method further comprises disabling the transmitting of the pulses of invisible electromagnetic radiation when a face is detected by face recognition.

The present principles also relate to a first device for remote-stimulated illumination of a second device, the first device including a processor, a memory, an electromagnetic radiation source and a photodetector. The processor, the memory, the electromagnetic radiation source and the photodetector are configured to transmit, by the electromagnetic radiation source, pulses of invisible electromagnetic radiation and to direct, through electronical arrangement for directing the invisible electromagnetic radiation, each pulse of invisible electromagnetic radiation to a different spot in a search area for searching the second device. The second device comprising materials that convert the invisible electromagnetic radiation into visible light, the processor, the memory, electromagnetic radiation source and the photodetector are configured to determine the location of the second device, the location of the second device being identified by the spot targeted during the pulse and by a high output level of a photodetector during at least one pulse, the high output level being higher than an output level of the photodetector during absence of a pulse, the photodetector detecting visible light; and to direct the invisible electromagnetic radiation to the determined location for remote-stimulated illumination of the second device through photoluminescence.

According to a further aspect of the device, the processor, the memory, the electromagnetic radiation source and the photodetector are further configured to determine if the high output level is among a highest output level detected from all targeted spots.

According to a further aspect of the device, the processor, the memory, the electromagnetic radiation source and the photodetector are further configured to transmit the pulses synchronized with a refresh rate of a display device.

According to a further aspect of the device, the processor, the memory, the electromagnetic radiation source and the photodetector are further configured to adjust a pulse width of the pulses as a function of a desired illumination of the device.

According to a further aspect of the device, the processor, the memory, the electromagnetic radiation source and the photodetector are further configured to comprise a face detection, and to disable the transmitting of the pulses of invisible electromagnetic radiation when a face is detected by the face recognition.

### BRIEF DESCRIPTION OF THE DRAWINGS

More advantages of the present disclosure will appear through the description of particular, non-restricting embodiments. To describe the way the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure. The embodiments will be described with reference to the following drawings in which:
**Figure 1** is an exemplary environment in which the present principles can be applied.
**Figure 2** illustrates some of the present principles including how to discover a location of a targeted device and how to direct (aim) the UV light source towards the targeted device.
**Figure 3** is an embodiment of a detection of a location of a device according to the present principles.
**Figure 4** is an apparatus for remote device illumination according to the present principles.
**Figure 5** is a different embodiment of an apparatus for remote device illumination according to the present principles.
**Figure 6** is a flow chart of an embodiment according to the present principles.

It should be understood that the drawings are for purposes of illustrating the concepts of the disclosure and are not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

One of the features of a wireless device is that it can be freely moved about as long as the device remains within reception/transmission range of the device it wirelessly communicates with. When the illumination of the wireless device is provided through photoluminescence stimulated remotely by an electromagnetic radiation source, it is desirable to be able to position the radiation source such that the wireless device is illuminated with enough intensity even if not directly in front of the radiation source. This is to ensure that sufficient energy is received by the phosphorescent or fluorescent material on the wireless device, while protecting the vision of the user of the wireless device from the radiation source. US 7,531,764 to Lev et al. proposed an UV light source to be manipulated by a user and to be directionally adjustable. However, it is not easy for a user to manipulate and direct a source that emits light that is invisible for the human eye. It is also not easy for a user to manipulate the directionally adjustable invisible light source when the wireless device enables the user to use the wireless device at a certain distance from the directionally adjustable invisible light source. Then, the directionally adjustable invisible light source may be beyond arm reach. Further, manipulation of the directionally adjustable invisible light source may lead to the user directing the invisible light source into a direction different from the direction of the wireless device for which it is intended. The user may for example, willingly or unwillingly, direct the invisible light source into his eyes or in someone else's eyes, which may be harmful for vision.

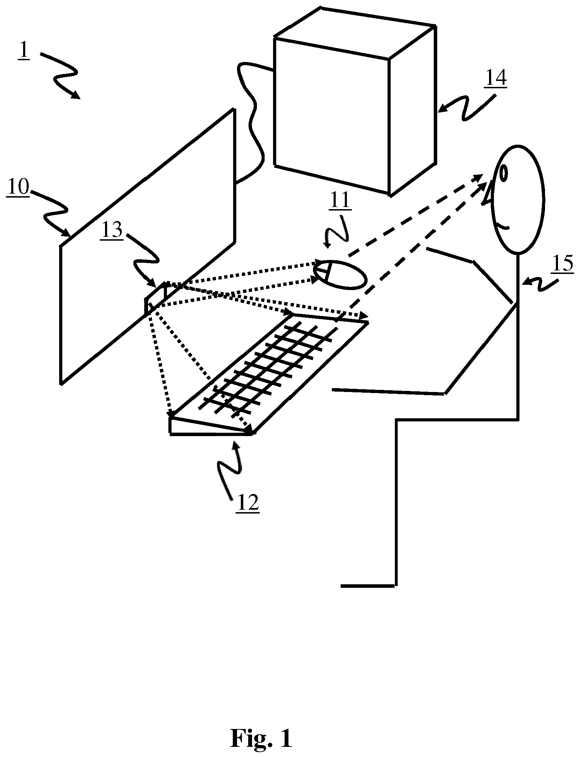

**Figure 1** is an exemplary environment for application of the present principles. Environment **1** includes a display device **10** (e.g., a TV set or a PC monitor), a wireless keyboard **12** and a wireless pointing device **11**, a personal computer **14**, and a user **15**. Devices **12** and **11** communicate in a wireless manner with PC **14**. Display device **10** is connected to PC **14** via a wired connection. Display device **10** includes an UV light source **13**. The UV light source illuminates the wireless devices via the UV light beams that are illustrated by means of broken lines. The UV light source **13** may be positioned elsewhere than illustrated, for example, in the top, in the side, or in the supporting frame of display device **10**, in PC **14**, or separately from display device **10** and PC **14**. Several UV light sources may be used for individual coverage of the targeted devices, for example, one UV light source may be used to illuminate the keyboard device **12**, while a second UV light source may be used to illuminate pointing device **11**. The UV light emitted by the UV light source that hits the wireless devices **11** and **12**, is absorbed by the phosphorescent or fluorescent material on these devices. The phosphorescent or fluorescent material releases the stored energy in the form of visible light, that is received by the user's (**15**) eyes. The UV light emitted by the UV light source(s) is directed to the wireless devices and not to the user **15**. This beam forming ensures that maximum energy is directed to the wireless devices, thereby not wasting energy, and also ensures that the user's eyes do not receive UV light directly emitted by the UV light source. In the exemplary environment of figure 1, devices **12** and **11** are wireless devices. However, the present principles are also applicable to wired devices.

The directivity of the UV light source is realized for example through known optical arrangements such as (micro-) lenses, (micro-) prisms or light guides. These optical arrangements are electronically operated to aim the UV light source in a desired direction.

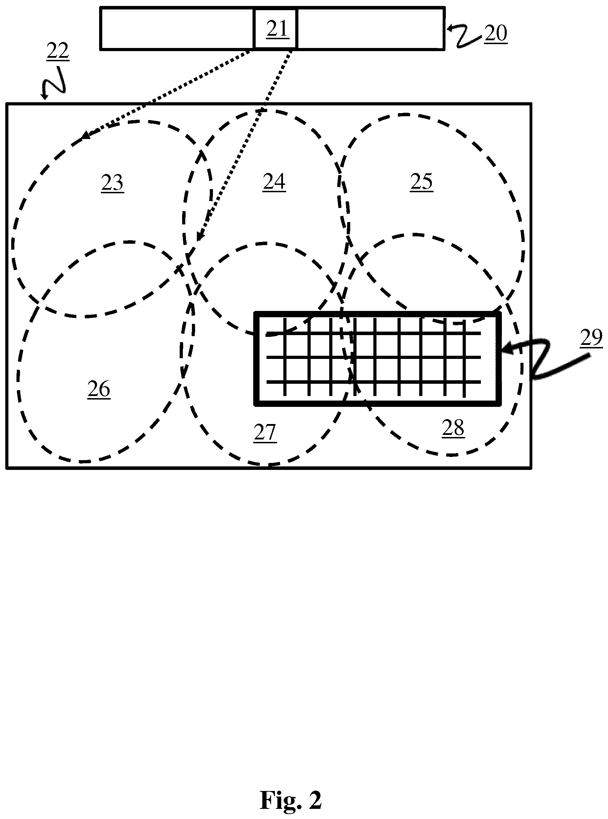

**Figure 2** illustrates some of the present principles including how to discover a location of a targeted device and how to direct (aim) the UV light source (invisible light source, LED, laser, black light, electromagnetic radiation source operating in the invisible light spectrum) towards the targeted device, which may be a wired device or a wireless device. An approximately rectangular area **22** is defined in which the targeted device (here, a keyboard **29**) is searched. The dimensions of this area are limited by the location of the UV light source **21**, here integrated into a display device **20**, the maximum angles at which the light source can project the light or is allowed to operate with regard to the protection of the user's (**15**) eyes, the allowed UV light intensity which may be subject to legal or other regulations, the sensitivity of any photodetectors (photosensors, detector of light or electromagnetic radiation in the visible spectrum) used, and the minimum energy to be received by the targeted device to reemit sufficient visible light for the user to be visibly comfortable, defined by the operating range of the UV light source. In practice, if the targeted device is a keyboard or a pointing device, the dimensions of this area may be limited to, for example, a space having a surface of one to several square meters (tens of square feet) in front of and below a display device if the UV light source is incorporated in the display device. The UV light source is sequentially directed to each individual spot of a set of spots **23-28**. According to a particular embodiment, a photodetector (not shown), preferably mounted close to the UV light source, receives visible light emitted by photoluminescence from the targeted device when the targeted device is illuminated by the UV light source, the device comprising phosphorescent or fluorescent materials (photo-excitable ink, paint, fluids, solids) that convert the invisible electromagnetic radiation into visible light. According to a particular embodiment, the photodetector has a directional sensibility and covers the same area illuminated by the UV light source to avoid side effects due to hysteresis of the phosphorescent or fluorescent material. According to a particular embodiment, the UV light source is a single UV light emitting device of which the UV light beam is orientable through electronical or electromechanical means towards a spot in area **22**. According to a particular embodiment, the UV light source is mounted rotatable (movable, orientable) in an electronically controllable support (an electronic or electromechanical arrangement for directing the invisible electromagnetic radiation through electronical/electromechanical means into a desired direction; an electronically or electromechanically orientable support). According to a particular embodiment, the UV light source comprises electromechanically orientable piezo crystal(s), reflecting surface(s), mirror(s), prism(s) or light guide(s) that enable the UV light beam to be oriented via electronical or electromechanical means. According to a particular embodiment, the UV light source includes a plurality (array) of individual UV light sources, each of which is mounted such as to provide an UV light beam in a different direction. For example, referring to the embodiment of figure 2, an UV light source includes six UV LEDs, each of the six UV LEDs being mounted in a support such that it illuminates one of the spots **23** to **28**, and such that none of the UV LEDs illuminate a same spot though there may be some overlapping regions. According to a particular embodiment, the array of UV light sources is itself mounted in an electronically or electromechanically orientable support, such that the whole of the UV light source array can be oriented to target an area **22** that is in a different location, for improved coverage.

Similarly, according to particular embodiments, the photodetector is implemented as a single photodetector, of which the directional sensitivity is electronically or electromechanically orientable or not, or an array of photodetectors, mounted such that their orientation is different and fixed with regard to the other photodetectors of the array. Similarly, according to a particular embodiment, the photodetector, when implemented as an array of photodetectors, is mounted in an electronically or electromechanically orientable support, such that the whole of the photodetector array can be oriented to target an area **22** that is in a different location, for improved coverage of location detection.

According to a particular embodiment, the UV light source and the photodetector are mounted in a same electronically or electromechanically orientable support.

In the embodiment of figure 2 six spots are shown to avoid unnecessary obfuscation of the drawing. According to a requirement of precision and/or cost or a tradeoff between these requirements, two to any number of spots may be used, and consequently if the UV light source includes an array of UV light sources and/or corresponding photodetectors, each of the individual UV light sources of such array may be used to be directed to one or more spots, and each of the individual photodetectors of such array may be used to be directed to one or more spots.

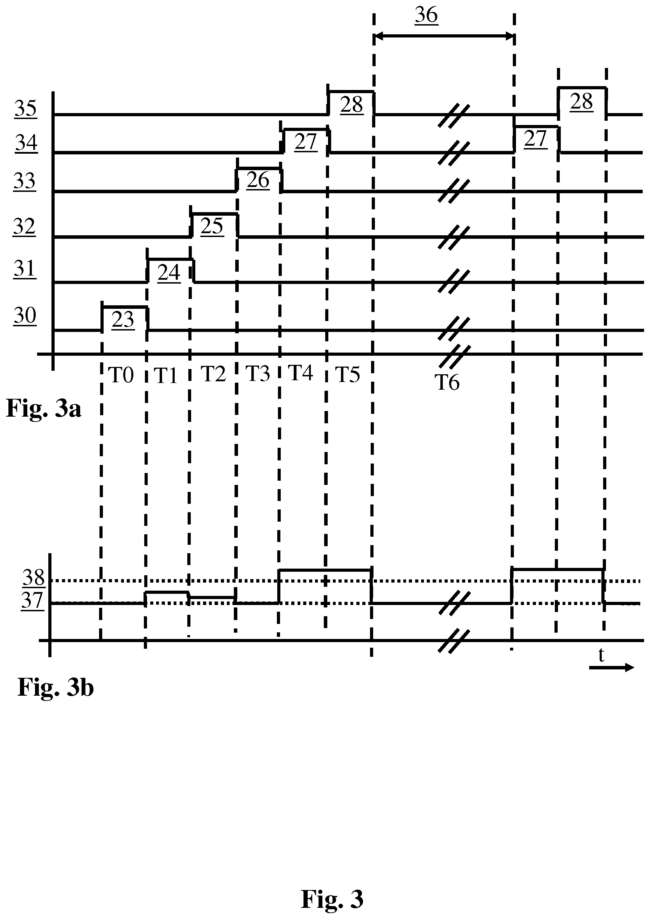

**Figure 3** **is** an embodiment of a detection of a location of a device according to the present principles. Figure 3a represents a scanning process with sequential (differentiated, alternated) 'illumination' (transmission of UV light) of the different spots **23-28** in area **22** by an UV light source, as depicted on a time line presented on a horizontal axis. The absence of a pulse of light (a low signal level, binary '0') indicates that a spot is not illuminated. A presence of a pulse (a high signal level, binary '1') indicates that a spot is illuminated. On a vertical axis are represented, from bottom to top, illumination of spots **23-28** on respectively time lines **30** to **35.** The UV light source **21** is controlled to illuminate spot **23** during T0 (a duration sufficiently long to excite the phosphorescent / fluorescent material of the searched device). The UV light source **21** is further controlled to illuminate (transmit directed electromagnetic radiation in the invisible light spectrum to) each of the further spots **24-28** one after another (a different sequence than illustrated is possible according to the present principles) during a time of a duration T1-T5 respectively. Figure 3b represents a signal **37** as detected by a photodetector. It can be observed that when the UV light source is directed to spots **23** and **26** during T0 respectively during T3, no light is detected, and the signal delivered by the photodetector is low, i.e. below a detection threshold **38** (low signal level, binary '0'). The detection threshold can be set to be above the level of signal that is received when the UV light source is inactive (absence of a pulse of UV light), in order to compensate for the presence of visible ambient light. This threshold (ambient light threshold) may be dynamically updated as a function of the level of ambient light by measuring the output level of the signal from the photodetector during absence of a pulse of UV light. Such an ambient light level is illustrated by means of broken line **37.** It can be observed that when the UV light source is directed to spots **24** and **25** during T1 and T2, some light is still detected and the output level of the photodetector exceeds the ambient light threshold, because small parts of the targeted device are illuminated by the UV light source. However, this small quantity of light may correspond to noise and may not be significant for determining the presence of the targeted device. Therefore, the threshold may be 'tuned' to be set higher, i.e. above the ambient light level and above the 'noise' level. The 'noise' level can be determined from at least one completion of the scan. A scan is completed when all the different spots have been illuminated and the output of the photodetector has been measured for all the different spots. When the scan is completed the highest output signal of the photodetector was measured at T4 and T5. The threshold can therefore be adjusted after a complete scan to be set higher, for example between a highest insignificant level (T1) and a highest significant level (T4, T5), such as indicated by broken line **38**. As the level of the signal output by the photodetector during T1/T2 is lower than the threshold, the signal level remains equivalent to a low signal level or binary '0'. When the UV light source is directed to spots **27** and **28** during T4 and T5, an important amount of light is detected by the photodetector, and since the level of the signal output by the photodetector is above the threshold, the signal level corresponds to a high signal level or a binary '1'. This means that, in spots **27** and **28**, the presence of the targeted device is detected. According to the particular embodiment illustrated in figure 3, once the presence of the targeted device has been detected in one or more spots (in a location), it is regularly verified if the targeted device remains in the same location, or, to the contrary, if the targeted device has been moved. The location (spot(s)) in which the presence of the targeted device was last detected, is therefore memorized (stored, recorded) and as the UV light source is directed again to that location (that/those spot(s)) to illuminate the targeted device it is verified if the photodetector still detects a signal level above the threshold (or binary '1'). Between these illuminations/verifications, the detection may be inactivated, for example, during a period T6 of a duration **36**. According to a particular embodiment, when, after a verification, the targeted device is no longer detected in the previously recorded location (spot(s)), the previous described detection can be reinitialized (the previously recorded location is removed/deleted from memory) and the search for the targeted device restarts as previously described. According to a particular embodiment, when, after a verification, the targeted device is no longer detected in the previously recorded location (spot(s)), the targeted device is preferably searched in spots that are neighboring the spot(s) in which the targeted device was previously detected, and if the targeted device is not found in any of the neighboring spots, the search is reinitialized as previously described. According to a particular embodiment, the 'on' periods (frequency) with which the UV light source is enabled (with which the transmission of the UV light is pulsed), is synchronized with the 'on' periods (frequency, refresh rate, refresh frequency) of the display device, to avoid visible artefacts such as stroboscopic effects or flicker caused by interference between the pulsation of visible light emitted by the phosphorescent or fluorescent material on the targeted device and pulsation of the visible light emitted by the display device. Information related to the refresh frequency of the display device can be directly obtained from the display device when the UV light source is integrated into the display device. According to a particular embodiment, the pulse duration (pulse width, e.g., of pulses **27** and **28**) of the illumination of the targeted device is configured to be adjustable as a function of a desired level of light intensity of the targeted device illumination. According to a particular embodiment for still improved detectability of the targeted device, additional markers, signs, lines or areas of the targeted device might be applied with photo-luminescent material. According to a particular embodiment, the photodetector is or includes a camera. For example, the targeted device may have special markers on some coins of the device that can easily be detected by the camera, or tags may be present on the targeted device that can be detected by the camera, and scanned and decoded to identify the targeted device and/or its location. According to a particular embodiment, the targeted device is painted (printed) on a surface, for example a desk. The device is then for example a keyboard that is printed with invisible ink on the surface of a desk, and the keyboard becomes visible when illuminated with UV light. Then, the device that includes the UV light source and possibly the photodetector, e.g. the display device, is movable with regard to the fixed location of the printed keyboard on the desk, and the above discussed principles are applied to discover the location of the keyboard on the desk. According to a particular embodiment, the present principles includes face recognition, which enables to (temporarily) disable the emission of UV light into the direction where a face was recognized. This avoids UV light from adversely affecting the user's vision. According to a particular embodiment, the device that includes the UV light source and/or photodetector is a game box, and the targeted device is a gamepad. According to a particular embodiment, the targeted device includes an accelerometer and the output of the accelerometer, combined with the result of the previously described scan, is used to improve the location discovery of the targeted device when the targeted device is in steady movement.

The above embodiments and examples are described for use with an UV light emitting element as a source for indirect (remote-stimulated) illumination of a device through photoluminescence. Other types of invisible electromagnetic radiation sources such as infra-red light electromagnetic radiating sources may be used in combination with photo-luminescent material which converts the invisible electromagnetic radiation into electromagnetic radiation in the visible spectrum (visible light) through photoexcitation, without diverting from the present principles.

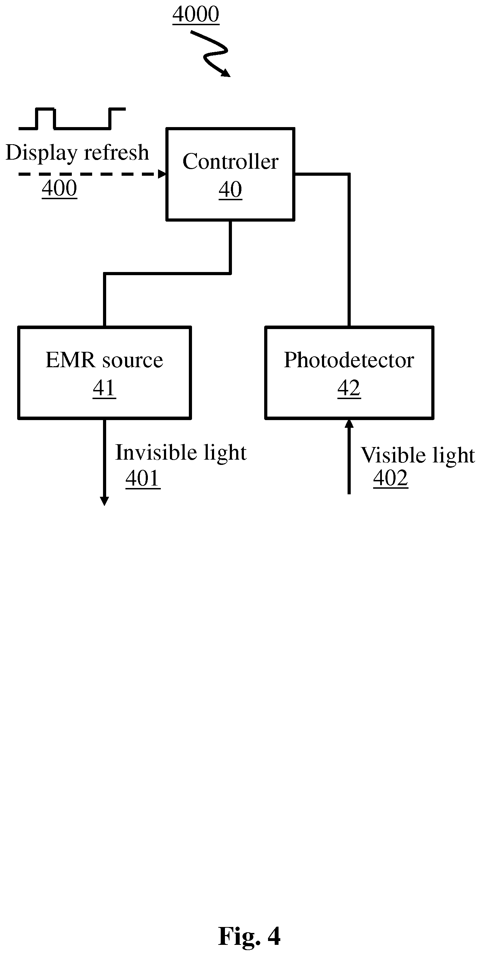

**Figure 4** is an apparatus **4000** for remote device illumination through photoluminescence according to the present principles. An electromagnetic radiation (EMR) source **41** of invisible light is capable of emitting (transmitting, sending) pulses of the electromagnetic radiation **401** to different spots **23-28** in a search area **22**. The direction of the source is electronically adjustable by a controller **40** so that the controller **40** can instruct the source **41** to emit radiation pulses in a direction of different spots **23-28** in the search area **22**. A photodetector **42** transmits the levels of visible light received by it (**402**) to the controller. Similar to the source **41**, the photodetector **42** may be controlled by the controller to be aimed in the direction of a spot to which a pulse is (being) transmitted. The controller **40** records (memorizes, stores) the different output levels of the photodetector and relates these to the targeted spots. The presence of the device (**29**) to detect in the area **22** is determined by the controller **40** from the spots (**27**, **28**) having the highest corresponding photodetector output level. Optionally, the controller **40** may receive as an input a display refresh **400.** The controller may use this display refresh **400** to synchronize the emission of the pulses with the display refresh.

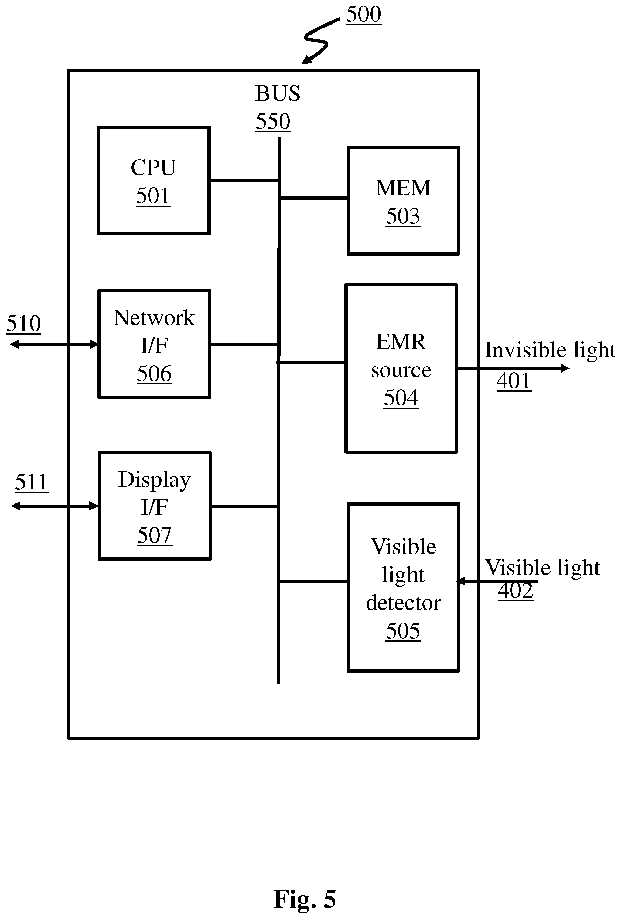

**Figure 5** is a different embodiment of an apparatus **500** for remote device illumination through photoluminescence according to the present principles. The device **500** includes a central processing unit or processor **501**, a memory **503**, a light source **504** and a visible light detector **505**, and optionally, a network interface **506** and a display interface **507**. All of these elements are interconnected via an internal communication bus **550**. The electromagnetic radiation source **504** of invisible light is capable of emitting (transmitting, sending) pulses of the electromagnetic radiation **401** to different spots **23-28** in a search area **22**. The direction of the source **504** is electronically adjustable by CPU **501** so that the CPU **501** can instruct the source **504** to emit radiation pulses in a direction of different spots **23-28** in the search area **22**. Photodetector **505** transmits the levels of visible light received by it (**402**) to CPU **501**. Similar to source **504**, photodetector **505** may be controlled by the CPU **501** to be aimed in the direction of a spot **23-28** to which a pulse is (being) transmitted. The CPU **501** records (memorizes, stores) the different output levels of the photodetector in memory **503** and relates these to the targeted spots. The presence of the device (**29**) to detect in the area **22** is determined by the CPU **501** from the spots (**27**, **28**) having the highest corresponding photodetector output level. Optionally, the CPU **501** may receive as an input a display refresh. This display refresh may be received via display interface **507** from connection **511** with a display device **10**. The CPU **501** may use this display refresh **400** to synchronize the emission of the pulses with the display refresh.

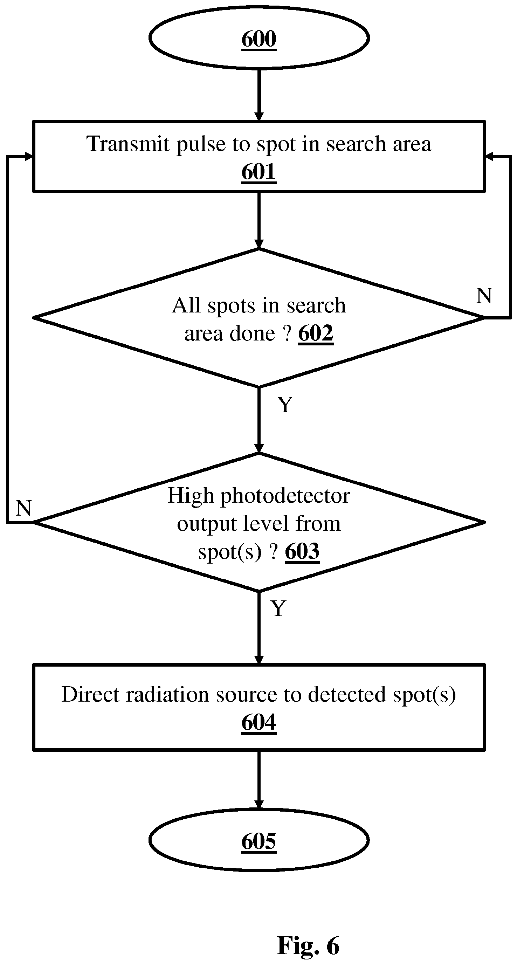

**Figure 6** is a flow chart **600** of an embodiment of a method of remote-stimulated device illumination through photoluminescence according to the present principles. In a step **601,** a source of electromagnetic radiation in the invisible spectrum emits (transmits, sends) pulses of invisible electromagnetic radiation to a different spot in a search area for searching the device that is to be remotely illuminated by the source through photoluminescence. For each different spot, the pulse of electromagnetic radiation is directed via an electronical or electromechanical arrangement to the spot. For each spot, the output level of a photodetector is measured and memorized (stored), the photodetector, operating in the visible light spectrum, receiving any visible light emitted by the device when it is illuminated by the source, the device comprising materials that convert the invisible electromagnetic radiation into visible light when receiving the invisible electromagnetic radiation. In a step **602**, it is verified if all spots in the search area have been handled (if a pulse of electromagnetic radiation in the invisible spectrum has been emitted for each different spot). If not, step **601** is engaged again. If all spots in the area have been handled, step **603** is engaged. In step **603**, the output levels of the photodetector are read. The highest output levels of the photodetector that are higher than an output level of the photodetector during absence of a pulse, are selected. The corresponding spot(s) indicate(s) (identifies/identify) the spot(s) in the area where the device is located. If there is/are none of such highest output level(s), the device location could not be detected, and step **601** is reengaged. If there is/are such highest output level(s), the device location is determined, and the radiation source is directed to the corresponding spot(s) in step **604** for illuminating the device. The flow chart ends with step **605**.

It is to be appreciated that some elements in the drawings may not be used or be necessary in all embodiments. Some operations may be executed in parallel. Embodiments other than those illustrated and/or described are possible. For example, a device implementing the present principles may include a mix of hard- and software.

It is to be appreciated that aspects of the principles of the present disclosure can be embodied as a system, method or computer readable medium. Accordingly, aspects of the principles of the present disclosure can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the principles of the present disclosure can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. Some or all aspects of the storage medium may be remotely located (e.g., in the 'cloud'). It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method (600) of remote-stimulated device (29) illumination through photoluminescence, comprising:
transmitting (601), by an electromagnetic radiation source (41, 504), pulses of invisible electromagnetic radiation and directing, through electronical arrangement for directing the invisible electromagnetic radiation, each pulse of invisible electromagnetic radiation to a different spot (23-28) in a search area (22) for searching the device;
the device comprising materials that convert the invisible electromagnetic radiation into visible light, determining the location of the device, the location of the device being identified by the spot targeted during the pulse and by a high output level of a photodetector (42, 505) during at least one pulse (603), the high output level being higher than an output level of the photodetector during absence of a pulse, the photodetector detecting visible light; and
directing (604) the invisible electromagnetic radiation to the determined location for remote-stimulated illumination of the device through photoluminescence.

2. The method according to claim 1, wherein the high output level is further among a highest output level detected from all targeted spots.

3. The method according to claim 1 or 2, wherein said transmitting of said pulses is synchronized with a refresh rate of a display device (10).

4. The method according to claim 3, wherein the electronical arrangement is comprised in the display device.

5. The method according to any of claims 1 to 4, wherein the photodetector is comprised in the electronical arrangement.

6. The method according to any of claims 1 to 5, wherein a pulse width of said pulses is adjusted as a function of a desired illumination of the device.

7. The method according to any of claims 1 to 6, wherein, when the device is moved and a presence of the device in the determined location is not detected by a high output level of the photodetector, the presence of the device is searched in spots that are neighboring to spots in the determined location.

8. The method according to any of claims 1 to 7, further comprising disabling the transmitting of the pulses of invisible electromagnetic radiation when a face is detected by face recognition.

9. A first device (4000, 21, 10, 500) for remote-stimulated illumination of a second device (11, 12) through photoluminescence, wherein the first device comprises a processor (501), a memory (503), an electromagnetic radiation source (41, 504) and a photodetector (42, 505) configured:
to transmit, by the electromagnetic radiation source, pulses of invisible electromagnetic radiation and to direct, through electronical arrangement for directing the invisible electromagnetic radiation, each pulse of invisible electromagnetic radiation to a different spot (23-28) in a search area (22) for searching the second device;
the second device comprising materials that convert the invisible electromagnetic radiation into visible light, to determine the location of the second device, the location of the second device being identified by the spot targeted during the pulse and by a high output level of a photodetector during at least one pulse, the high output level being higher than an output level of the photodetector during absence of a pulse, the photodetector detecting visible light; and
to direct the invisible electromagnetic radiation to the determined location for remote-stimulated illumination of the second device through photoluminescence.

10. The device according to claim 9, wherein said processor, said memory, said electromagnetic radiation source and said photodetector are further configured to determine if the high output level is among a highest output level detected from all targeted spots.

11. The device according to claim 9 or 10, wherein said processor, said memory, said electromagnetic radiation source and said photodetector are further configured to transmit said pulses synchronized with a refresh rate of a display device (10).

12. The device according to any of claims 9 to 11, wherein said processor, said memory, said electromagnetic radiation source and said photodetector are further configured to adjust a pulse width of said pulses as a function of a desired illumination of the device.

13. The device according to any of claims 9 to 12, wherein said processor, said memory, said electromagnetic radiation source and said photodetector are further configured to comprise a face detection, and to disable the transmitting of the pulses of invisible electromagnetic radiation when a face is detected by the face recognition.
